**Europäisches Patentamt**

**European Patent Office**

**Office européen des brevets**

(19)

(11) Veröffentlichungsnummer: **0 162 382**
**B1**

(12) **EUROPÄISCHE PATENTSCHRIFT**

(45) Veröffentlichungstag der Patentschrift: **29.08.90**

(21) Anmeldenummer: **85105753.9**

(22) Anmeldetag: **10.05.85**

(51) Int. Cl.⁵: **C 08 L 69/00, C 08 L 67/02, C 08 L 27/12, C 08 J 3/00**

(54) Thermoplastische Formmassen auf Basis von Polyalkylenterephthalat, Polycarbonat und Polymerisat und Verfahren zu ihrer Herstellung.

(30) Priorität: **19.05.84 DE 3418750**

(43) Veröffentlichungstag der Anmeldung:
**27.11.85 Patentblatt 85/48**

(45) Bekanntmachung des Hinweises auf die
Patenterteilung:
**29.08.90 Patentblatt 90/35**

(84) Benannte Vertragsstaaten:
**DE FR GB IT NL**

(56) Entgegenhaltungen:
EP-A-0 025 920
EP-A-0 064 648
EP-A-0 131 751
DE-A-2 918 883
DE-A-3 234 174

(73) Patentinhaber: **BAYER AG**
**D-5090 Leverkusen 1 Bayerwerk (DE)**

(72) Erfinder: **Lindner, Christian, Dr.**
**Riehler Strasse 200**
**D-5000 Köln 60 (DE)**
Erfinder: **Ott, Karl-Heinz, Dr.**
**Paul-Klee-Strasse 54**
**D-5090 Leverkusen (DE)**
Erfinder: **Nouvertné, Werner, Dr.**
**Scheiblerstrasse 95**
**D-4150 Krefeld (DE)**
Erfinder: **Müller, Peter Rolf, Dr.**
**Paul-Klee-Strasse 76**
**D-5090 Leverkusen (DE)**

**Die Akte enthält technische Angaben, die nach dem Eingang der Anmeldung eingereicht wurden und die nicht in dieser Patentschrift enthalten sind.**

Courier Press, Leamington Spa, England.

**Beschreibung**

Die Erfindung betrifft thermoplastische Formmassen aus Polyalkylenterephthalat, aromatischem Polycarbonat und Polymerisat mit einer Glasübergangstemperatur von unter −20°C, das teilweise aus fluoriertem Polyolefin besteht, sowie ein Verfahren zur Herstellung dieser Formmassen.

Formmassen auf Basis von Polyalkylenterephthalat, aromatischem Polycarbonat und Polymerisat besitzen hervorragende mechanische Eigenschaften (DE—PS—23 43 609 ≙US—PS—38 64 428; DE—OS—31 18 526, 31 18 697; europäische veröffentliche Patentanmeldung 20 605 ≙US—PS—42 57 937, europäische veröffentlichte Patentanmeldung 25 920 ≙US—PS—42 64 487).

In der Praxis hat sich sich aber gezeigt, daß sich aus den bekannten Formmassen hergestellte Formteile für die Verwendung in heißer Umgebung, wie z.B. im Motorraum von Kraftfahrzeugen, nicht in allen Fällen eignen, weil sie zu früh erweichen.

Aufgabe der Erfindung war es nun, Polyalkylenterephthalat/Polycarbonat/Polymerisat-Formmassen mit erhöhter Erweichungstemperatur (nach Vicat) bereitzustellen, ohne die hervorragenden mechanischen Eigenschaften nennenswert zu beeinträchtigen.

Überraschenderweise wurde die Aufgabe dadurch gelöst, daß man ein Polymerisat verwendet, das teilweise aus fluoriertem Polyolefin besteht und durch gemeinsame Koagulation verschiedener Latices erhalten worden ist.

Gegenstand der Erfindung sind also thermoplastische Formmassen aus

A. 1 bis 99, vorzugsweise 1 bis 80, insbesondere 30 bis 60, Gewichtsteilen Polyalkylenterephthalat,

B. 1 bis 99, vorzugsweise 20 bis 99, insbesondere 40 bis 70, Gewichtsteilen aromatischem Polycarbonat und

C. 1 bis 30, vorzugsweise 3 bis 20, insbesondere 5 bis 12, Gewichtsteilen Polymerisat, dadurch gekennzeichnet, daß das Polymerisat C aus mindestens einem Polymerisat mit einer Glasübergangstemperatur unter −20°C und—bezogen auf die Formmasse A+B+C—0.015 bis 0.8, vorzugsweise 0.2 bis 0.8, Gew.-% fluoriertem Polyolefin besteht und durch Mischen wäßriger Dispersionen des fluorierten Polyolefins und des Polymerisats mit einer Glasübergangstemperatur unter −20°C und durch gemeinsame Koagulation erhalten worden ist.

Weiterer Gegenstand der Erfindung ist ein Verfahren zur Herstellung der obigen Formmassen, wonach man zunächst wäßrige Dispersionen mindestens eines fluorierten Polyolefins und mindestens eines Polymerisats mit einer Glasübergangstemperatur von unter −20°C mischt, gemeinsam koaguliert, isoliert, trocknet und gegebenenfalls nach Granulierung oder Zerkleinerung mit den geschmolzenen Komponenten A und B mischt.

Aus der DE—OS—16 94 217 war bekannt, daß Polyester, wie z.B. Polyalkylenterephthalat, mit Zusätzen von 0.05 bis 25% Polytetrafluorethylen höhere Kristallisationsgeschwindigkeiten besitzen und damit höhere Dimensionsstabilitäten ergeben sowie kürzere Cycluszeiten ermöglichen.

Die DE—OS—22 21 772 beschreibt glasfaserverstärkte flammwidrige Polyester, z.B. Polyethylen- oder -butylenterephthalate, die durch Zusätze von 0,5 bis 2.5% Polytetrafluorethylen im Brandfall nicht tropfen und aufgrund eines Synergismus zwischen Polytetrafluorethylen und Flammschutzmittel weniger Flammschutzmittel benötigen.

Aus der US—PS—36 73 278 sind Polycarbonate mit Zusätzen von 0.1 bis 3% Polytetrafluorethylen bekannt, die erhöhte Flammwidrigkeit besitzen und im Brandfall nicht tropfen. Außerdem zeigen derartige Polycarbonate ausgezeichnete Oberflächen und trotz Verformung bei hohen Temperaturen keine Verfärbung.

Aus DE—A—32 34 174 sind schlagzähe thermoplastische Formmassen aus Polyester insbesondere Polyalkylenterephthalat, aromatischem Polycarbonat sowie ethylencopolymeren bekannt, denen u.a. Gleit- und entformungsmittel sowie keim bildungsmittel wie z.B. Polytetrafluorethylen zugesetzt werden können.

Keine der genannten Literaturstellen befaßt sich mit der eingangs geschilderten Problemstellung, so daß sie zu deren Lösung auch nicht beitragen konnten.

Polyalkylenterephthalate A im Sinne der Erfindung sind Reaktionsprodukte aus aromatischen Dicarbonsäuren oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate A lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Carl Hanser Verlag, München, 1973).

Bevorzugte Polyalkylenterephthalate A enthalten mindestens 80, vorzugsweise mindestens 90 Mol-%, bezogen auf die Dicarbonsäurekomponente, Terephthalsäurereste und mindestens 80, vorzugsweise mindestens 90 Mol.-%, bezogen auf die Diolkomponente, Ethylenglykol- und/oder Butandiol-1,4-reste.

Die bevorzugten Polyalkylenterephthalate A können neben Ethylenglykol- bzw. Butandiol-1,4-resten bis zu 20 Mol.-%, vorzugsweise bis zu 10 Mol.-%, anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan - diol - 1,5, Hexandiol - 1,6, Cyclohexan - dimethanol - 1,4, 3 - Ethylpentandiol - 2,4, 2 - Methylpentandiol - 2,4, 2,2,4 - Trimethylpentandiol - 1,3 und -1,6, 2 - Ethylhexandiol - 1,3, 2,2 - Diethylpropandiol - 1,3, Hexandiol - 2,5, 1,4 - Di - (β - hydroxyethoxy) - benzol, 2,2 - Bis - (4 - hydroxycyclohexyl) - propan, 2,4 - Dihydroxy - 1,1,3,3 - tetramethyl - cyclobutan,

2

EP 0 162 382 B1

2,2 - Bis - (3 - β - hydroxyethoxyphenyl) - propan und 2,2 - Bis - (4 - hydroxypropoxyphenyl) - propan (DE—OS—24 07 674, 24 07 776, 27 15 932).

Die Polyalkylenterephthalate A können durch Einbau relativ kleiner Mengen 3- oder 4-wertiger Alkohole oder 3- oder 4-basischer Carbonsäuren, wie sie z.B. in der DE—OS—19 00 270 und der US—PS—3 692 744 beschrieben sind, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate A, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Die als Komponente A vorzugsweise verwendeten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g jeweils gemessen in Phenol/o-Dichlorbenzol (1:1 Gewichtsteile) bei 25°C.

Unter aromatischen Polycarbonaten B im Sinne dieser Erfindung werden Homopolycarbonate, Copolycarbonate und Mischungen dieser Polycarbonate verstanden, denen z.B. mindestens eines der folgenden Diphenole zugrunde liegt:

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone,
α,α'-Bis-(hydroxyphenyl)-diisopropylbenzole

sowie deren kernalkylierte und kernhalogenierte Derivate. Diese und weitere geeignete Diphenole sind z.B. in den US—PS—3 028 365, 3 275 601, 3 148 172, 3 062 781, 2 991 273, 3 271 367, 2 999 835, 2 970 131 und 2 999 846, in den DE—OS—1 570 703, 2 063 050, 2 063 052, 2 211 956, 2 211 957, der FR—PS—1 561 518 und in der Monographie von H. Schnell, "Chemistry and Physics of Polycarbonates", Interscience Publishers, New York, 1964, beschrieben.

Bevorzugte Diphenole sind z.B.

4,4'-Dihydroxydiphenyl,
2,4-Bis-(4-hydroxyphenyl)-2-methylbutan,
α,α'-Bis-(4-hydroxyphenyl)-p-diisopropylbenzol,
2,2-Bis-(3-methyl-4-hydroxyphenyl)-propan und
2,2-Bis-(3-chlor-4-hydroxyphenyl)-propan.

Besonders bevorzugte Diphenole sind z.B.:

2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)propan und
1,1-Bis-(4-hydroxyphenyl)-cyclohexan.

Die aromatischen Polycarbonate B können durch den Einsatz geringer Mengen, vorzugsweise von 0,05 bis 2,0 Mol.-% (bezogen auf eingesetzte Diphenole), drei- oder mehr als dreifunktioneller Verbindungen, beispielsweise solcher mit drei oder mehr als drei phenolischen Hydroxylgruppen, verzweigt sein.

Die aromatischen Polycarbonate B besitzen in der Regel mittlere Molekulargewichte $M_w$ von 10 000 bis 200 000, vorzugsweise von 20 000 bis 80 000 ermittelt durch Lichtstreuung.

Zur Einstellung des Molekulargewichts $M_w$ der Polycarbonate B können in bekannter Weise Kettenabbrecher, wie beispielsweise Phenol, Halogenphenole oder Alkylphenole, in den berechneten Mengen eingesetzt werden.

Die Polymerisate C umfassen Copolymerisate—insbesondere Pfropfcopolymerisate—mit kautschukelastischen Eigenshaften, die im wesentlichen aus mindestens 2 der folgenden Monomeren erhältlich sind: Chloropren, Butadien-1,3, Isopren, Styrol, Acrylnitril, Ethylen, Propylen, Vinylacetat und (Meth-)Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme Verlag, Stuttgart 1961, S. 393—406 und in C. B. Bucknall, "Toughened Plastics", Appl. Science Publishers, London 1977, beschrieben sind. Die Copolymerisate C sind mindestens partiell vernetzt und besitzen Gelgehalte von über 40 Gew.-%, insbesondere über 60 Gew.-%.

Besonders bevorzugte Polymerisate C sind Pfropfpolymerisate, die durch Pfropfreaktion von

I. 10 bis 70, vorzugsweise 15 bis 50, insbesondere 20 bis 40 Gew.-%, bezogen auf Pfropfprodukt, mindestens eines (Meth-)Acrylsäureesters oder 10 bis 70, vorzugsweise 15 bis 50, insbesondere 20 bis 40 Gew.-% eines Gemischs aus 10 bis 50, vorzugsweise 20 bis 35, Gew.-%, bezogen auf Gemisch, Acrylnitril oder (Meth-)Acrylsäureester und 50 bis 90, vorzugsweise 65 bis 80, Gew.-%, bezogen auf Gemisch, Styrol auf

3

II. 30 bis 90, vorzugsweise 50 bis 85, insbesondere 60 bis 80 Gew.-%, bezogen auf Pfropfprodukt, eines Butadien-Polymerisats mit mindestens 50 Gew.-%, bezogen auf II, Butadienresten als Pfropfgrundlage erhältlich ist, wobei vorzugsweise der Gelanteil der Pfropfgrundlage II mindestens 70 Gew.-% (in Toluol gemessen), der Pfropfgrad G 0,15 bis 0,55 und der mittlere Teilchendurchmesser $d_{50}$ des Pfropfpolymerisats C 0,1 bis 2, vorzugsweise 0,2 bis 0,6 µm betragen.

(Meth-)Acrylsäureester I sind Ester der Acrylsäure bzw Methacrylsäure und einwertiger Alkohole mit 1 bis 8 C-Atomen. Besonders bevorzugt sind Methacrylsäuremethylester, -ethylester und -propylester.

Die Pfropfgrundlage II kann neben Butadienresten bis zu 50 Gew.-%, bezogen auf II, Reste anderer ethylenisch ungesättigter Monomerer, wie z.B. Styrol, Acrylnitril, Ester der Acryl- oder Methacrylsäure mit 1—4 C-Atomen in der Alkoholkomponente (wie Methylacrylat, Ethylacrylat, Methylmethacrylat, Ethylmethacrylat), Vinylester und Vinylether enthalten. Die bevorzugte Pfropfgrundlage III besteht aus reinem Polybutadien.

Da bei der Pfropfreaktion die Pfropfmonomeren I bekanntlich nicht unbedingt vollständig auf die Pfropfgrundlage II aufgepfropft werden, werden erfindungsgemäß unter Pfropfpolymerisaten C auch solche Produkte verstanden, die durch Polymerisation der Monomeren I in Gegenwart der Grundlagen II gewonnen werden.

Der Pfropfgrad G bezeichnet das Gewichtsverhältnis von aufgepfropften Pfropfmonomeren zur Pfropfgrundlage und ist dimensionslos.

Die mittlere Teilchengröße $d_{50}$ ist der Durchmesser, oberhalb und unterhalb dessen jeweils 50 Gew.-% der Teilchen liegen. Er kann bestimmt werden mittels Ultrazentrifugen-Messungen (W. Scholtan, H. Lange, Kolloid. Z. und Z. Polymere 250 (1972), 782—796) oder Elektronenmikroskopie und anschließende Teilchenauszählung (G. Kämpf, H. Schuster, Angew. Makromolekulare Chemie 14, (1970), 111—129) oder mittels Lichtstreuungsmessungen.

Besonders bevorzugte Polymerisate C sind z.B. auch Pfropfpolymerisate aus

a) 20 bis 90 Gew.-%, bezogen auf C, Acrylatkautschuk mit einer Glasübergangstemperatur unter −20°C als Pfropfgrundlage und

b) 10 bis 80 Gew.-%, bezogen auf C, mindestens eines polymerisierbaren ethylenisch ungesättigten Monomeren, dessen bzw. deren in Abwesenheit von (a) entstandenen Homo- bzw. Copolymerisate eine Glasübergangstemperatur über 25°C hätten, als Pfropfmonomere.

Die Acrylatkautschuke (a) der Polymerisate C sind vorzugsweise Polymerisate aus Acrylsäurealkylestern, gegebenenfalls mit bis zu 40 Gew.-%, bezogen auf (a), anderer polymerisierbarer ethylenisch ungesättigter Monomerer. Zu den bevorzugten polymerisierbaren Acrylsäureestern gehören $C_1$—$C_8$-Alkylester, beispielsweise Methyl-, Ethyl-, Butyl-, Octyl- und 2-Ethylhexylester; Halogenalkylester, vorzugsweise Halogen-$C_1$—$C_8$-alkylester, wie Chlorethylacrylat; sowie Mischungen dieser Monomeren.

Die Acrylatkautschuke (a) können sind mindestens partiell vernetzt.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2, Gew.-%, bezogen auf Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare ethylenisch ungesättigte Monomere, die neben den Acrylsäureestern gegebenenfalls zur Herstellung der Pfropfgrundlage (a) dienen können, sind z.B. Acrylnitril, Styrol, α-Methylstyrol, Acrylamide, Vinyl-$C_1$—$C_6$-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

Der Gelgehalt der Pfropfgrundlage (a) wird bei 25°C in Dimethylformamid bestimmt (M. Hoffmann, H. Krömer, R. Kuhn, Polymeranalytik I und II, Georg Thieme Verlag, Stuttgart 1977).

Acrylatkautschuke als Pfropfgrundlage (a) können auch Produkte sein, die einen Kern enthalten; insbesondere einen vernetzten Dienkautschukkern aus einem oder mehreren konjugierten Dienen, wie Polybutadien oder ein Copolymerisat eines konjugierten Diens mit einem ethylenisch ungesättigten Monomer, wie Styrol und/oder Acrylnitril, als Kern.

Der Anteil des Polydien-Kerns in der Pfropfgrundlage (a) kann 0,1 bis 80, bevorzugt 0,1 bis 20 Gew.-%, bezogen auf (a), betragen. Schale und Kern können unabhängig voneinander teilvernetzt oder hochvernetzt sein.

Besonders bevorzugte Pfropfgrundlagen (a) für Pfropfpolymerisate C auf Basis von Polyacrylsäureestern seien nachfolgend zusammengefaßt:

1. Acrylsäureesterpolymerisate und -copolymerisate ohne Dienkautschukkern und

2. Acrylsäureesterpolymerisate und -copolymerisate, die einen Dienkautschukkern enthalten. Derartige Pfropfpolymerisate C sind z.B. in den DE—OS—31 18 526 und 31 18 697 beschrieben.

Die Pfropfausbeute, d.h. der Quotient aus der Menge des aufgepfropften Monomeren (b) und der Menge des eingesetzten Pfropfmonomeren (b), beträgt in der Regel 20 bis 80 Gew.-%. Die Bestimmung kann wie bei M. Hoffmann H. Krömer, R. Kuhn, Polymeranalytik, Bd. 1, Georg Thieme Verlag, Stuttgart 1977, beschrieben, erfolgen.

Bevorzugte Pfropfmonomere (b) sind α-Methylstyrol, Styrol, Acrylnitril, Methylmethacrylat oder Mischungen dieser Monomeren. Bevorzugte Pfropfmonomer-Mischungen sind solche aus Styrol und Acrylnitril im Gew.-Verhältnis 90:10 bis 50:50.

Solche Pfropfpolymerisate C auf Basis von Polyacrylsäureestern werden z.B. in der DE—PS—24 44 584 (=US—PS—4 022 748) und in der DE—OS—27 26 256 (=US—PS—4 096 202) beschrieben.

Die fluorierten Polyolefine sind hochmolekular und besitzen Glasübergangstemperaturen von über −20°C, in der Regel von über 100°C, Fuorgehalte von 59 bis 76, vorzugsweise 65 bis 76, insbesondere von 70 bis 76 Gew.-% und mittlere Teilchendurchmesser $d_{50}$ von 0,05 bis 20 µm. Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate. Die fluorierten Polyolefine sind bekannt (vgl. "Vinyl and Related Polymers" von Schildknecht, John Wiley & Sons, Inc., New York, 1952, Seite 484—494;

Fluorpolymers" von Wall, Wiley-Interscience, John Wiley & Sons, Inc., New York, Band 13, 1970, Seite 623—654; "Modern Plastics Encyclopedia", 1970—1971, Band 47, Nr. 10 A, Oktober 1970, McGraw-Hill, Inc., New York, Seite 134, 138 und 774; "Modern Plastics Encyclopedia", 1975—1976, Oktober 1975, Band 52, Nr. 10 A, McGraw-Hill, Inc., New York, Seite 27, 28 und 472, und US—PS—3 671 487, 3 723 373 und 3 838 092).

Bevorzugte Dispersionen von fluoriertem Polyolefin besitzen Feststoffgehalte von 30 bis 70, insbesondere von 50 bis 60, Gew.-%. Die Mischungen aus Dispersionen des Polymerisats mit einer Glasübergangstemperatur von unter −20°C und des fluorierten Olefins können wie üblich aufgearbeitet werden, z.B. durch Sprühtrocknung, Gefriertrocknung oder Koagulation mittels Zusatz von anorganischen oder organischen Salzen, Säuren, Basen oder organischen, mit Wasser mischbaren Lösungsmitteln wie Alkoholen und Ketonen, vorzugsweise bei Temperaturen von 20—150°C, insbesondere von 50—100°C. Die Trocknung kann bei 50—200°C, bevorzugt zwischen 70°C und 150°C erfolgen.

Das Gewichtsverhältnis von Polymerisat mit einer Glasübergangstemperatur von unter −20°C und dem fluorierten Polyolefin kann 80:20 bis 99.9:0.1 betragen, insbesondere 90:10 bis 99:1.

Die erfindungsgemäßen Formmassen können zur Erhöhung der Benzinfestigkeit bis zu 5 Gew.-%, bezogen auf Formmasse A+B+C, Ethylenhomo- bzw. -copolymerisat enthalten. Ethylencopolymerisate in diesem Sinne sind Polyethylene, deren Reste neben Ethylenresten bis zu 30 Gew.-%, bezogen auf Ethylencopolymerisat, aus Resten anderer copolymerisierbarer Monomerer bestehen. Andere copolymerisierbare Monomer für die Herstellung dieser Ethylencopolymerisate sind z.B. (Meth-)Acrylsäure und die oben für die Herstellung von Pfropfgrundlage und Pfropfauflage für Polymerisat C aufgezählten Monomeren.

Die erfindungsgemäßen Formmassen können übliche Additive, wie Gleit- und Entformungsmittel, Nukleiermittel, Stabilisatoren, Füll- und Verstärkungsstoffe, Flammschutzmittel sowie Farbstoffe enthalten.

Die gefüllten bzw. verstärkten Formmassen können bis zu 60 Gew.-%, bezogen auf die verstärkte Formmasse, Füll- und/oder Verstärkungsstoffe enthalten. Bevorzugte Verstärkungsstoffe sind Glasfasern. Bevorzugte Füllstoffe die auch verstärkend wirken können, sind Glaskugeln, Glimmer, Silikate, Quarz, Talkum, Titandioxid, Wollastonit.

Die mit Flammschutzmitteln ausgerüsteten Polyesterformmassen enthalten Flammschutzmittel in einer Konzentration von im allgemeinen weniger als 30 Gew.-%, bezogen auf die flammgeschützten Formmassen.

Es kommen alle bekannten Flammschutzmittel in Frage, wie z.B. Polyhalogendiphenyl, Polyhalogendiphenylether, Polyhalogenphthalsäure und ihre Derivate und Polyhalogen oligo- und -polycarbonate, wobei die entsprechenden Bromverbindungen besonders wirksam sind. Außerdem enthalten sie in der Regel einen Synergisten, wie z.B. Antimontrioxid. Die in den nachfolgenden Beispielen genannten Teile sind Gewichtsteile. Prozentangaben beziehen sich auf das Gewicht.

Beispiele

I. Verwendete Komponenten:

1. Polycarbonat aus Bisphenol-A, Phenol und Phosgen, relative Viskosität 1.285, gemessen in Dichlormethan bei 25°C in 0,5%iger Lösung, und mit 0,1 Gew.-% Phosphit-Stabilisator ausgerüstet.

2. Polybutylenterephthalat mit einer Intrinsic-Viskosität von 1.18 dl/g, gemessen in Phenol/o-Dichlorbenzol (Gew.-Verhältnis 1:1) bei 25°C im Ubbelohde-Viskosimeter.

3. Pfropfpolymerisat, 80% Pfropfgrundlage aus vernetztem Polybutadien (Gelgehalt über 70%, gemessen in Toluol) und 20% Pfropfauflage aus Methylmethacrylat.

5

4. Mischung II aus 95 Gew.-% Pfropfpolymerisat gemäß 1.3 und 5 Gew.-% Polytetrafluorethylen mit einem Fluorgehalt von 74 Gew.-%.

5. Polytetrafluorethylen (Fluorgehalt 74 Gew.-%)

II. Herstellung des Gemisches aus Pfropfpolymerisat und Tetrafluorethylen I.4 100 Teile einer 40 gew.-%igen wäßrigen Dispersion das Pfropfpolymerisates I.3 und 3,5 Teile einer wäßrigen Tetrafluorethylendispersion mit einem Feststoffgehalt von 60 Gew.-% und einem Fluorgehalt (bezogen auf den Feststoff) von 73,7 Gew.-% wurden vermischt und mit 1,8 Gew,-%, bezogen auf Polymerfeststoff, phenolischer Antioxidantien stabilisiert. Bei 85—95°C wurde die Mischung mit einer wäßrigen Lösung von Magnesiumsulfat (Bittersalz) und Essigsäure bei pH 4—5 koaguliert, filtriert und bis zur Elektrolytfreiheit gewaschen, anschließend durch Zentrifugieren von der Hauptmenge Wasser befreit und danach bei 100°C zu einem Pulver getrocknet.

III. Herstellung und Zusammensetzung der Formmassen

Auf einem Zweiwellenextruder wurden die Komponenten unter Stickstoffatmosphäre aufgeschmolzen (siehe nachfolgende Tabelle 1) und homogenisiert. Die Zylindertemperatur wurde so gewählt, daß die in der Tabelle angegebene Massetemperatur gewährleistet war. Der Schmelzstrang der erfindungsgemäßen Mischungen wurde vor dem Austritt aus der Düse entgast, in Wasser abgekühlt, granuliert und getrocknet. Die Verarbeitung erfolgte auf einer Spritzgießmaschine.

TABELLE 1

| Beispiel | Komponenten [Gew.-%] | | | | | Massetemperatur [°C] | |
|----------|---|---|---|---|---|----------|----------|
| | 1 | 2 | 3 | 4 | 5 | Extruder | Spritzguß |
| 1 (Vergleich) | 52 | 36 | 10 | — | — | 277 | 270 |
| 2 (Vergleich) | 51,5 | 36 | 9,5 | — | 0,5 | 277 | 270 |
| 3 | 52 | 36 | — | 10 | — | 278 | 270 |

IV. Eigenschaften
Die Vicat-B-Temperatur wurde entsprechend DIN 53 450 bestimmt.

TABELLE 2

| Beispiel | Vicat B [°C] |
|----------|--------------|
| 1 Vergleich | 119 |
| 2 Vergleich | 119 |
| 3 | 125 |

**Patentansprüche**

1. Thermoplastische Formmassen aus
A. 1 bis 99 Gewichtsteilen Polyalkylenterephthalat,
B. 1 bis 99 Gewichtsteilen aromatischen Polycarbonat und
C. 1 bis 30 Gewichtsteilen Polymerisat,
wobei das Polymerisat C aus mindestens einem Copolymerisat, das mindestens partiell vernetzt ist und eine Glasübergangstemperatur unter −20°C und Gelgehalte über 40 Gew.-% besitzt, und -bezogen auf die Formmassen A+B+C—0.015 bis 0.8 Gew.-% fluoriertem Polyolefin besteht und durch Mischen wäßriger Dispersionen des fluorierten Polyolefins und des Polymerisats mit einer Glasübergangstemperatur unter −20°C und durch gemeinsame Koagulation erhalten worden ist.

2. Formmassen nach Anspruch 1, dadurch gekennzeichnet, daß sie 1 bis 80 Gewichtsteile Komponente A, 20 bis 99 Gewichtsteile Komponente B und 3 bis 20 Gewichtsteile Komponente C enthalten.

3. Formmassen nach Ansprüchen 1 und 2, dadurch gekennzeichnet, daß sie 30 bis 60 Gewichtsteile Komponente A, 40 bis 70 Gewichtsteile Komponente B und 5 bis 12 Gewichtsteile Komponente C enthalten.

6

4. Formmassen nach Ansprüchen 1—3, dadurch gekennzeichnet, daß das Polymerisat C aus mindestens einem Polymerisat mit einer Glasübergangstemperatur unter −20°C und 0,1 bis 20 Gew.-% fluoriertem Polyolefin, bezogen auf C+ fluoriertes Polyolefin, besteht.

5. Verfahren zur Herstellung der Formmassen nach Ansprüchen 1—4, wonach man zunächst wäßrige Dispersionen mindestens eines fluorierten Polyolefins und mindestens eines Polymerisats mit einer Glasübergangstemperatur von unter −20°C mischt, gemeinsam koaguliert, isoliert, trocknet und—gegebenenfalls nach Granulierung oder Zerkleinerung—mit den geschmolzenen Komponenten A und B mischt.

**Revendications**

1. Matières à mouler thermoplastiques consistant en:
A. 1 à 99 parties en poids d'un téréphtalate de polyalkylène,
B. 1 à 99 parties en poids d'un polycarbonate aromatique et
C. 1 à 30 parties en poids d'un polymère,
le polymère C consistant en au moins un copolymère, réticulé en partie au moins et ayant une température de transition du second ordre inférieure à −20°C et une teneur en gel supérieure à 40% en poids, et—par rapport aux matières à mouler A+B+C—0,015 à 0,8% en poids d'une polyoléfine fluorée, et ayant été obtenu par mélange de dispersions aqueuses de la polyoléfine fluorée et du polymère ayant une température de transition du second ordre inférieure à −20°C et coagulation en commun.

2. Matières à mouler selon la revendication 1, caractérisées en ce qu'elles contiennent de 1 à 80 parties en poids du composant A, de 20 à 99 parties en poids du composant B et de 3 à 20 parties en poids du composant C.

3. Matières à mouler selon les revendications 1 et 2, caractérisées en ce qu'elles contiennent de 30 à 60 parties en poids du composant A, de 40 à 70 parties en poids du composant B et de 5 à 12 parties en poids du composant C.

4. Matières à mouler selon les revendications 1 à 3, caractérisées en ce que le polymère C consiste en au moins un polymère ayant une température de transition du second ordre inférieure à −20°C et 0,1 à 20% en poids (par rapport à C+la polyoléfine fluorée) d'une polyoléfine fluorée.

5. Procédé de préparation des matières à mouler selon les revendications 1 à 4, dans lequel on mélange d'abord des dispersions aqueuses d'au moins une polyoléfine fluorée et d'au moins un polymère ayant une température de transition du second ordre inférieure à −20°C, on coagule en commun, on isole, on sèche et—éventuellement après mise en granulés ou broyage—on mélange avec les composants A et B fondus.

**Claims**

1. Thermoplastic moulding compounds of
A. 1 to 99 parts by weight polyalkylene terephthalate,
B. 1 to 99 parts by weight aromatic polycarbonate and
C. 1 to 30 parts by weight polymer,
the polymer C consisting of at least one copolymer which is at least partly crosslinked and has a glass transition temperature below −20°C and gel contents of more than 40% by weight and, based on the moulding compounds A+B+C, 0.015 to 0.8% by weight fluorinated polyolefin and having been obtained by mixing of aqueous dispersions of the fluorinated polyolefin and the polymer having a glass temperature below −20°C and by co-coagulation.

2. Moulding compounds as claimed in claim 1, characterized in that they contain 1 to 80 parts by weight component A, 20 to 99 parts by weight component B and 3 to 20 parts by weight component C.

3. Moulding compounds as claimed in claims 1 and 2, characterized in that they contain 30 to 60 parts by weight component A, 40 to 70 parts by weight component B and 5 to 12 parts by weight component C.

4. Moulding compounds as claimed in claims 1 to 3, characterized in that the polymer C consists of at least one polymer having a glass transition temperature below −20°C and 0.1 to 20% by weight fluorinated polyolefin (based on C+fluorinated polyolefin).

5. A process for the production of the moulding compounds claimed in claims 1 to 4, in which aqueous dispersions of at least one fluorinated polyolefin and at least one polymer having a glass transition temperature below −20°C are first mixed and then co-coagulated, isolated, dried and—optionally after granulation or size-reduction—mixed with the molten components A and B.